# EUROPEAN PATENT APPLICATION

(11) **EP 2 913 983 A2**
(43) Date of publication of application: **02.09.2015**
(21) Application number: 13803436.8
(22) Date of filing: 13.08.2013
(51) Int. Cl.: H04L 29/12, H04L 12/741

(54) **METHOD AND SYSTEM FOR MANAGING IPV6 ADDRESS CONFLICT AUTOMATICALLY**

(30) Priority: 19.11.2012 CN 201210469641
(71) Applicant: ZTE Corporation, Shenzhen, Guangdong 518057 (CN)
(72) Inventor: ZHAO, Shen, Shenzhen Guangdong 518057 (CN); LIU, Chenggong, Shenzhen Guangdong 518057 (CN); ZHAI, Qingyong, Shenzhen Guangdong 518057 (CN)
(74) Representative: Willquist, Sofia Ellinor
(86) International application number: PCT/CN2013/081374
(87) International publication number: WO 2013/185731

(57) **Abstract**

A method and system for managing IPv6 address conflict automatically are provided. The method comprises: after receiving a DAD message of a terminal, a BRAS searching local records to judge whether there is an interface identifier in the DAD message under a prefix which is the same with a local routing prefix in the DAD message, and if yes, then transmitting a reconfiguration message to the terminal; otherwise, then recording the interface identifier.

## Description

### Technical Field

The present invention relates to the communication field, and in particular, to a method and system for managing Internet Protocol Version 6 (abbreviated as IPv6) address conflict automatically.

### Background of the Related Art

Today, the broadband technology and the broadband user are growing rapidly, and the crisis of the V4 address space is a long-standing problem, which is a main driving force of upgrading Internet Protocol (abbreviated as IP) technology version. China Next Generation Internet demonstration project (CNGI project) is a national-level strategy project and the main objective of the project is to regard the IPv6 as a core and establish an experimental platform of the next generation Internet. The start of the objective indicates that the IPv6 of our country enters a substantive developing stage. The operators at all levels are stepping up the paces to deploy V6 network as well, and the V6 broadband access network has already entered the pre-commercial stage progressively.

The design idea of the IPv6 basic protocol is to hope that the V6 network can become a plug and play access network; while for some operators, the address requires to be managed through a state format (that is, dynamic address allocation), therefore, the Dynamic Host Configuration Protocol for IPv6 (abbreviated as DHCPv6) is raised at the right moment, which causes that the Stateless Address Auto configuration (abbreviated as SLAAC) function in the Neighbor Discovery Protocol (abbreviated as NDP) protocol and the DHCPv6 protocol address allocation function coexist in the existing IPv6 remote broadband access network topology environment.

Now, the popular Broadband Remote Access Server (abbreviated as BRAS) router device provides following typical IPv6 access user types: the static state dedicated line (IPHOST) user, the DCHPv6 user and the SLAAC user. As to the difference of the link modes, the DHCPv6 user and the SLAAC user can be respectively the Ether chain network link user and the Point-to-point Protocol Over Ethernet (abbreviated as PPPoE) link user.

Especially in the IPv6 networking, a multi-homed host becomes an increasingly important application scene. One host, besides having one wired network connection (such as, the Ethernet), also may have one or more wireless connections, such as, Bluetooth and 802.11 protocol. One host, besides connecting with physical links, also may connect with a virtual network or a tunnel network. For example, one host, besides connecting to the public Internet directly, also may connect to a tunnel privately-owned public network. As to an IPv6 transition scene, one tunnel link will be possibly added, for example, the hosts may be connected with a 6to4 tunnel (RFC3056) or a configuration tunnel (RFC2893) network.

While for the real application of the BRAS router device, what is often used is that the SLAAC function of the NDP protocol or the DHCPv6 protocol allocates the prefix to the user, and triggers the user to generate the address according to the prefix. As to a general global unicast IPV6 address, it is composed of a local routing prefix, a subnet identity identification number (Identity, ID) and an interface ID. Here the local routing prefix is a value allocated to a site (multiple sub-networks or links); and the subnet ID is an identifier of one link in the site. Usually the prefix allocated to the user by the BRAS device is a combination of the local routing prefix with the subnet ID, wherein, there may be no subnet ID, and the subnet ID is 0 Bit at this moment. The user generally uses the protocol standard and norm (EUI-64 principle) supported by itself to generate the interface ID of itself. Final the user uses the prefix allocated by the BRAS device and the interface ID generated by itself to form 128-bit global IPv6 addresses. As to the address generated by the new user, Duplicate Address Detection (abbreviated as DAD) will be performed within the local link range, that is, to multicast the DAD messages within the local link range and wait to check whether there is a reply. When the address is online on the local link, then the address will reply with the Neighbor Advertise (abbreviated as NA) message to the new user which generates the address lastly, to notify that the address cannot be used, that is because there is the node using the address within the local link range. Now the new user who sends out the DAD detection message and receives the NA message replied by the neighbor node needs to tag a repetition mark on the address generated by itself and waits for manual reconfiguration. After the new user has performed the DAD detection for specified times (note: the default times of the DAD detections varies with device differences, while it must be greater than once, which is generally three times and an interval time for each time is one second), if the NA message replied by another node is still not received in the local link range yet, then it is proved that there is no conflict within the local link range, that is, the new user can use the address normally. In the procedure of the new user generating the address according to the prefix allocated by the BRAS device, the new user supports, with one prefix, to generate multiple addresses once, or generate one or more addresses for many times, and it also supports to configure one or more addresses manually.

For a user, when a DAD detection fails for a generated IPV6 address within a local link range (that is, there is an address which conflicts with a new generated address in the local link range), the user is required to manually modify the address oneself and then perform the DAD detection again, and in a limiting case, the user may need to modify the addresses for many times; in this way, the user experience is very bad. As to the BRAS device, it does not want the user to modify IPv6 address manually by itself, and it wants the BRAS device to manage the address allocation after the conflict is formed even more.

As for the above-mentioned problem appearing in the related art, an effective solution is not put forward yet at present.

### Summary of the Invention

In order to solve the above-mentioned technical defect, the embodiments of the present invention provide a method and system for managing IPv6 address conflict automatically. After receiving the duplicate address detection (DAD) message of the terminal, if the BRAS judges that there is an interface identifier in the DAD message under a prefix which is the same with a local routing prefix in the DAD message, then it sends the interface identifier which is not recorded by the BRAS locally to the terminal, to achieve the objective of automatically managing the address conflict and improve the user experience.

A method for managing Internet Protocol Version 6 (IPv6) address conflict automatically, comprises:
after receiving a Duplicate Address Detection (DAD) message of a terminal, a Broadband Remote Access Server (BRAS) searching local records of the BRAS to judge whether there is an interface identifier in the DAD message under a prefix which is the same with a local routing prefix in the DAD message, and if yes, transmitting a reconfiguration message to the terminal; otherwise, recording the interface identifier

Preferably, the reconfiguration message comprises an interface identifier reset by the BRAS for the terminal, and the reset interface identifier is an interface identifier which is not recorded by the BRAS locally.

Preferably, the reconfiguration message comprises a type field, a length field and a content field, wherein, the type field is used for identifying a type of the present message, the length field is used for identifying a length of the content field, and the content field is used for carrying the interface identifier reset by the BRAS for the terminal.

Preferably, the reconfiguration message comprises a router advertisement (RA) message or a DHCPv6 reconfiguration message.

A system for managing Internet Protocol Version 6 (IPv6) address conflict automatically, comprises a Broadband Remote Access Server (BRAS), wherein, the BRAS comprises:
a receiving device, configured to: receive a Duplicate Address Detection (DAD) message of a terminal;
a searching device, configured to: search for an interface identifier under a local routing prefix in local records;
a judgment device, configured to: judge whether there is an interface identifier in the DAD message under a prefix which is the same with a local routing prefix in the DAD message;
a transmitting device, configured to: transmit a reconfiguration message to the terminal when judging there is an interface identifier in the DAD message under a prefix which is the same with a local routing prefix in the DAD message; and
a recording device, configured to: record the interface identifier.

Preferably, the reconfiguration message comprises an interface identifier reset by the BRAS for the terminal, and the reset interface identifier is an interface identifier which is not recorded by the BRAS locally.

Preferably, the reconfiguration message comprises a type field, a length field and a content field, wherein, the type field is used for identifying a type of the present message, the length field is used for identifying a length of the content field, and the content field is used for carrying the interface identifier reset by the BRAS for the terminal.

Preferably, the reconfiguration message comprises a router advertisement (RA) message or a DHCPv6 reconfiguration message.

A terminal, comprises:
a message transmitting device, configured to: transmit a Duplicate Address Detection (DAD) message of the terminal to a Broadband Remote Access Server (BRAS); and
a message receiving device, configured to: receive a reconfiguration message transmitted by the BRAS.

Preferably, the reconfiguration message comprises an interface identifier reset by the BRAS for the terminal, and the reset interface identifier is an interface identifier which is not recorded by the BRAS locally.

Preferably, the reconfiguration message comprises a type field, a length field and a content field, wherein, the type field is used for identifying a type of the present message, the length field is used for identifying a length of the content field, and the content field is used for carrying the interface identifier reset by the BRAS for the terminal.

Preferably, the reconfiguration message comprises a router advertisement (RA) message or a DHCPv6 reconfiguration message.

The embodiment of the present invention realizes the function that the BRAS device manages the IPv6 address conflict of the user automatically; improves the user experience, and the user does not needs to manually modify the IPv6 address once or many times when the DAD detection fails; moreover, the BRAS device manages the conflicting IPv6 addresses generated by the user automatically, and makes the user in the local link range easy to be managed.

### Brief Description of Drawings

FIG. 1 is a composition format diagram of a normal IPv6 global unicast address;
FIG. 2 is an encapsulation format diagram of a reconfiguration message;
FIG. 3 is a network topology networking diagram according to an embodiment of the present invention;
FIG. 4 is a flow chart of a realization method for managing IPv6 address conflict automatically according to an embodiment of the present invention.

### Preferred Embodiments of the Invention

The embodiment of the present invention is described in detail with reference to the accompanying drawings hereinafter. It should be illustrated that, in the case of not conflicting, the embodiments in the present application and various modes in these embodiments can be combined with each other.

The embodiment of the present invention provides a method for managing Internet Protocol Version 6 (IPv6) address conflict automatically, including the following steps.

After receiving a Duplicate Address Detection (DAD) message of a terminal, a Broadband Remote Access Server (BRAS) searches local records of the BRAS to judge whether there is an interface identifier in the DAD message under a prefix which is the same with a local routing prefix in the DAD message, and if yes, a reconfiguration message is transmitted to the terminal; otherwise, the interface identifier is recorded.

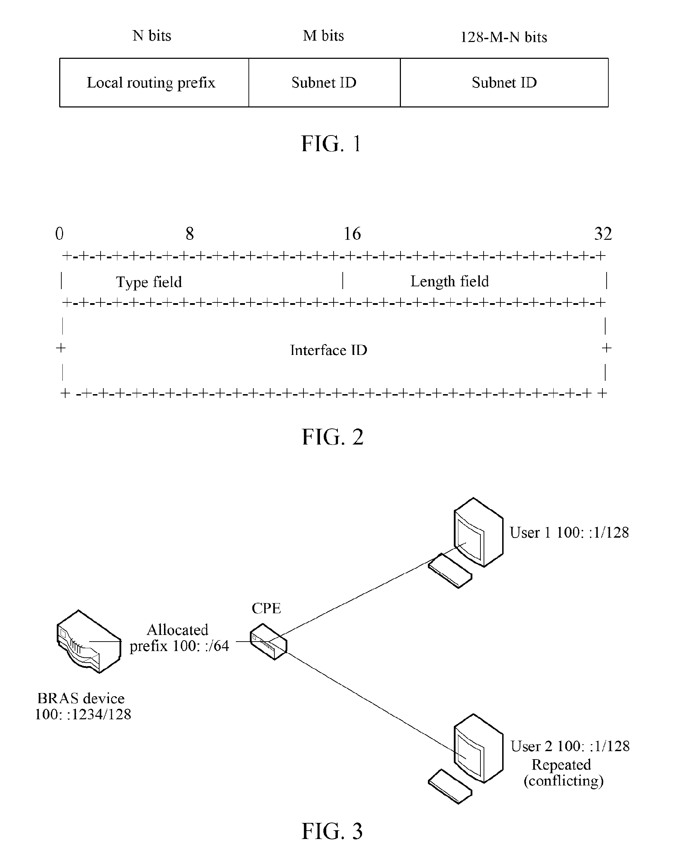

Wherein, the reconfiguration message includes an interface identifier reset by the BRAS for the terminal, and the reset interface identifier is an interface identifier which is not recorded by the BRAS locally. The reconfiguration message includes a type field, a length field and a content field, wherein, the type field is used for identifying a type of the present message, the length field is used for identifying a length of the content field, and the content field is used for carrying the interface identifier reset by the BRAS for the terminal. FIG. 2 shows the encapsulation format of the reconfiguration message.

Wherein, the reconfiguration message includes a router advertisement (RA) message or a DHCPv6 reconfiguration message.

The embodiment of the present invention further provides a system for managing Internet Protocol Version 6 (IPv6) address conflict automatically, including a Broadband Remote Access Server (BRAS), wherein, the BRAS includes:
a receiving device, configured to: receive a Duplicate Address Detection (DAD) message of a terminal;
a searching device, configured to: search for an interface identifier under a local routing prefix in local records of the BRAS;
a judgment device, configured to: judge whether there is an interface identifier in the DAD message under a prefix which is the same with a local routing prefix in the DAD message;
a transmitting device, configured to: transmit a reconfiguration message to the terminal when judging there is an interface identifier in the DAD message under a prefix which is the same with a local routing prefix in the DAD message; and
a recording device, configured to: record the interface identifier.

The present invention further provides a terminal, including:
a message transmitting device, configured to: transmit a Duplicate Address Detection (DAD) message of the terminal to a Broadband Remote Access Server (BRAS); and
a message receiving device, configured to: receive a reconfiguration message transmitted by the BRAS.

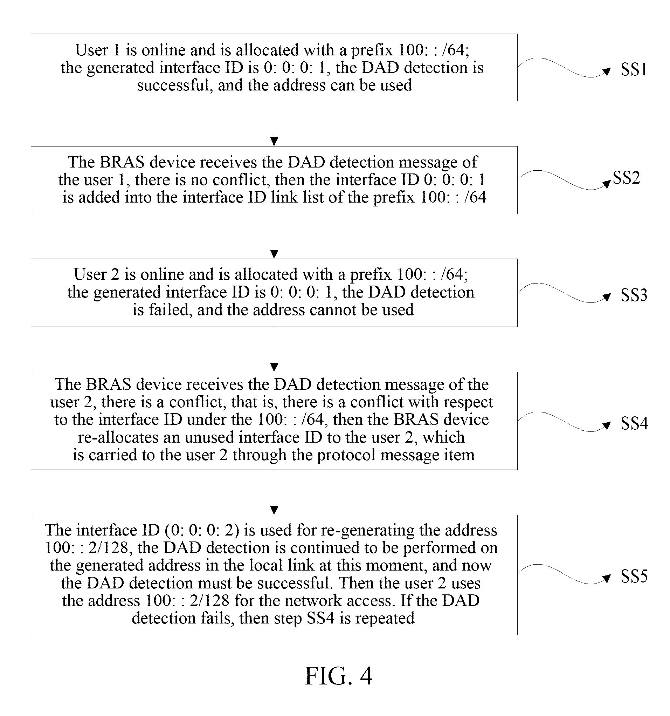

Application example
according to the network topology networking diagram of FIG. 3, the specific procedures are shown in FIG. 4, and the description is as follows.

In SS1, during the online procedure of the user 1 through the SLAAC function or the DHCPv6 protocol, the BRAS device allocates a 100: : /64-bit prefix to user 1. The interface ID generated by user 1 is 0: 0: 0: 1, and the address generated by user 1 is 100: : 1/128 at this moment. The DAD detection is performed on the address 100: : 1/128 generated by user 1, and the destination address of the DAD message is the multicast address of the requested node. Therefore, the nodes in all local links, including the BRAS device, can receive the DAD detection message. There is no address conflicting with the node in the local link range, and the DAD detection is successful, and user 1 can use the address of the IPV6 100: : 1/128 normally.

In SS2, after the BRAS device receives the DAD detection message of the user 1, the DAD message carries the address of the user 1, 100: : 1/128. Then the BRAS device acquires that the interface ID of the user 1 is 0: 0: 0: 1 at this moment, then the link list of the interface ID under the prefix 100: : /64 is searched to check whether the interface ID already exists therein. Because there is no address 100 : : 1/128 on the local link, that is, there is no interface ID 0: 0: 0: 1. Therefore, the BRAS stores the interface ID (0: 0: 0: 1) into the link list of the interface ID under the prefix 100: : / 64.

In SS3, during the online procedure of the user 2 through the SLAAC function or the DHCPv6 protocol, the BRAS device allocates the 100: : /64-bit prefix to user 2. The interface ID generated by user 2 is 0: 0: 0: 1, and the address generated by user 2 is 100: : 1/128 at this moment. The DAD detection is performed on the address 100: : 1/128 generated by user 2, and the destination address of the DAD message is the multicast address of the requested node. Therefore, the nodes in all local links, including the BRAS device, can receive the DAD detection message. The address of the user 1 already conflicts with the user 2, so after receiving the DAD message of the user 2, the user 1 will reply with the Neighbor Advertise (NA) message to the user 2, to tell the user 2 that its address has already been used by other interfaces within the local link range, and the user 2 cannot use the address, that is, the interface ID generated by the user cannot be used.

In SS4, after the BRAS device receives the DAD detection message of the user 2, the DAD detection message carries the address of the user 2, 100: : 1/128. Then the BRAS device acquires that the interface ID of the user 2 is 0: 0: 0: 1 at this moment, then the link list of the interface ID under the prefix100: : /64 is searched to check whether the interface ID already exists therein. Then it is found that the interface ID already exists in the link list of the interface ID. Then the BRAS device needs to allocate the interface ID in the non-interface ID link generated then by the BRAS device to the user 2 through the RA message in the SLAAC function or the DHCPv6 reconfiguration message. The BRAS device now will reply in unicast with the RA or the DHCPv6 reconfiguration message which carries a reconfiguration interface ID item, the new interface ID (0: 0: 0: 2), to the user 2.

In SS5, when the user 2 receives the RA or the DHCPv6 reconfiguration message which carries the reconfiguration interface ID item, the new interface ID (0: 0: 0: 2), the user 2 first finds that it is replied that there is a conflict with the address generated by itself in the local link network, and then the interface ID content in the reconfiguration interface ID item in the RA or the DHCPv6 reconfiguration message is extracted. The interface ID (0: 0: 0: 2) is used for re-generating the address 100: : 2/128. The DAD detection is continued to be performed on the generated address in the local link at this moment, and now the DAD detection must be successful. Then the user 2 uses the address 100: : 2/128 for the network access. If the DAD detection fails, then step SS4 is repeated.

It can be seen from the above-mentioned description that, the embodiment of the present invention can enable the BRAS device to manage the IPv6 address and interface ID conflict problem effectively, which improves the user experience.

Obviously, it can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module.

Each module or each step of the present invention can be implemented by a universal computing device, and they can be integrated in a single computing device, or distributed in a network made up by a plurality of computing devices. Alternatively, they can be implemented by program codes executable by the computing device, thus, they can be stored in the storage device and implemented by the computing device, or they are made into each integrated circuit module respectively, or a plurality of modules or steps therein are made into a single integrated circuit module to be implemented. This way, the present invention is not limit to any specific form of the combination of the hardware and software.

Obviously, the above described embodiment is only a preferred embodiment of the present invention and is not intended to limit the protection scope of the present invention. Those skilled in the art can deliberately make various modifications and variations with respect to the present invention without departing from the spirit and scope of the present invention. In this way, if the modifications and variations of the present invention belong to the scope of the appended claims of the present invention and their equivalent technologies, then the present invention is intended to include these modifications and variations.

### Industrial Applicability

The embodiment of the present invention realizes the function that the BRAS device manages the IPv6 address conflict of the user automatically; improves the user experience, and the user does not needs to manually modify the IPv6 address once or many times when the DAD detection fails; moreover, the BRAS device manages the conflicting IPv6 addresses generated by the user automatically, and makes the user in the local link range easy to be managed.

## Claims

1. A method for managing Internet Protocol Version 6 (IPv6) address conflict automatically, comprising:
after receiving a Duplicate Address Detection (DAD) message of a terminal, a Broadband Remote Access Server (BRAS) searching local records of the BRAS to judge whether there is an interface identifier in the DAD message under a prefix which is the same with a local routing prefix in the DAD message, and if yes, transmitting a reconfiguration message to the terminal; otherwise, recording the interface identifier.

2. The method according to claim 1, wherein:
the reconfiguration message comprises an interface identifier reset by the BRAS for the terminal, and the reset interface identifier is an interface identifier which is not recorded by the BRAS locally.

3. The method according to claim 2, wherein:
the reconfiguration message comprises a type field, a length field and a content field, wherein, the type field is used for identifying a type of the present message, the length field is used for identifying a length of the content field, and the content field is used for carrying the interface identifier reset by the BRAS for the terminal.

4. The method according to claim 1 or 2, wherein:
the reconfiguration message comprises a router advertisement (RA) message or a DHCPv6 reconfiguration message.

5. A system for managing Internet Protocol Version 6 (IPv6) address conflict automatically, comprising a Broadband Remote Access Server (BRAS), wherein, the BRAS comprises:
a receiving device, configured to: receive a Duplicate Address Detection (DAD) message of a terminal;
a searching device, configured to: search for an interface identifier under a local routing prefix in local records of the BRAS;
a judgment device, configured to: judge whether there is an interface identifier in the DAD message under a prefix which is the same with a local routing prefix in the DAD message;
a transmitting device, configured to: transmit a reconfiguration message to the terminal when judging there is an interface identifier in the DAD message under a prefix which is the same with a local routing prefix in the DAD message; and
a recording device, configured to: record the interface identifier.

6. The system according to claim 5, wherein:
the reconfiguration message comprises an interface identifier reset by the BRAS for the terminal, and the reset interface identifier is an interface identifier which is not recorded by the BRAS locally.

7. The system according to claim 6, wherein:
the reconfiguration message comprises a type field, a length field and a content field, wherein, the type field is used for identifying a type of the present message, the length field is used for identifying a length of the content field, and the content field is used for carrying the interface identifier reset by the BRAS for the terminal.

8. The system according to claim 5 or 6, wherein:
the reconfiguration message comprises a router advertisement (RA) message or a DHCPv6 reconfiguration message.

9. A terminal, comprising:
a message transmitting device, configured to: transmit a Duplicate Address Detection (DAD) message of the terminal to a Broadband Remote Access Server (BRAS); and
a message receiving device, configured to: receive a reconfiguration message transmitted by the BRAS.

10. The terminal according to claim 9, wherein:
the reconfiguration message comprises an interface identifier reset by the BRAS for the terminal, and the reset interface identifier is an interface identifier which is not recorded by the BRAS locally.

11. The terminal according to claim 10, wherein:
the reconfiguration message comprises a type field, a length field and a content field, wherein, the type field is used for identifying a type of the present message, the length field is used for identifying a length of the content field, and the content field is used for carrying the interface identifier reset by the BRAS for the terminal.

12. The terminal according to claim 9 or 10, wherein:
the reconfiguration message comprises a router advertisement (RA) message or a DHCPv6 reconfiguration message.
